# EUROPÄISCHE PATENTANMELDUNG

(11) **EP 4 431 738 A1**
(43) Veröffentlichungstag der Anmeldung: **18.09.2024**
(21) Anmeldenummer: 23162586.4
(22) Anmeldetag: 17.03.2023
(51) Int. Cl.: F04B 15/08, F04B 19/04, F04B 39/00, F04B 53/14, F04F 1/06, F04F 1/14, F17C 1/00

(54) **WASSERSTOFFSPEICHER MIT FLÜSSIGKOLBEN**

(71) Anmelder: Maximator Gmbh, 99734 Nordhausen (DE)
(72) Erfinder: ADLER, Michael, 2433 Margarethen am Moos (AT); NAGL, Christoph, 1030 Wien (AT); ADLER, Robert, 1030 Wien (AT); RASCH, Markus, 1030 Wien (AT); STEPHAN, Markus, 1030 Wien (AT)
(74) Vertreter: SONN Patentanwälte GmbH & Co KG

(57) **Zusammenfassung**

Die Erfindung betrifft einen Wasserstoffverdichter und/oder -verdränger, insbesondere einen Wasserstoffspeicher (1) zum Speichern von Wasserstoff (2), aufweisend: ein mit Wasserstoff (2) befülltes Wasserstoffvolumen, und ein mit einem Arbeitsfluid (3) befülltes Arbeitsfluidvolumen, wobei das Arbeitsfluid (3) als Kolben zur Veränderung des Wasserstoffvolumens ausgebildet ist, dadurch gekennzeichnet, dass das Arbeitsfluid (3) ein Polyalphaolefin aufweist. Die Erfindung betrifft weiters ein Verfahren zum Verdrängen und/oder Verdichten von Wasserstoff (2), mit den Schritten: (a) Bereitstellen des erfindungsgemäßen Wasserstoffverdichters und/oder -verdrängers, und (b) Nachführen von Arbeitsfluid (3) in den Wasserstoffverdichter und/oder -verdränger, sodass das Arbeitsfluidvolumen des Wasserstoffverdichters und/oder -verdrängers vergrößert wird und das Wasserstoffvolumen des Wasserstoffverdichters und/oder -verdrängers verkleinert wird.

## Beschreibung

Die Erfindung betrifft einen Wasserstoffverdichter und/oder - verdränger, vorzugsweise einen Wasserstoffspeicher zum Speichern von Wasserstoff oder eine Gehäuse-Kolben-Einheit, aufweisend:
ein mit Wasserstoff befülltes Wasserstoffvolumen, und
ein mit einem Arbeitsfluid befülltes Arbeitsfluidvolumen, wobei das Arbeitsfluid als Flüssigkolben zur Veränderung, nämlich zur Vergrößerung und/oder zur Verkleinerung, des Wasserstoffvolumens ausgebildet ist.

Weiters betrifft die Erfindung ein Verfahren zum Verdrängen und/oder Verdichten von Wasserstoff.

Weiters betrifft die Erfindung eine Gehäuse-Kolben-Anordnung, aufweisend:
ein Gehäuse, vorzugweise einen Zylinder, wobei das Gehäuse ein Arbeitsvolumen zur Aufnahme von Wasserstoff einschließt,
einen Festkörper-Kolben, welcher zur Veränderung des Arbeitsvolumens gegenüber dem Gehäuse beweglich ist, und
eine Dichtung zur Abdichtung der Bewegung des Festkörper-Kolbens gegenüber dem Gehäuse, wobei als Dichtung ein Dichtfluid vorgesehen ist.

Weiters betrifft die Erfindung einen Rotor aufweisend:
eine Rotationsachse,
einen Rotationsantrieb, und
eine solche Gehäuse-Kolben-Anordnung.

Schließlich betrifft die Erfindung ein Verfahren zum Abdichten der Bewegung eines Festkörper-Kolbens gegenüber einem Gehäuse.

Mit einer ersten Ausführungsform der Erfindung werden ein Wasserstoffverdichter bzw. Wasserstoffverdränger und ein entsprechendes Verfahren bereitgestellt, bei welchen Wasserstoff mittels einer im direkten Kontakt mit dem Wasserstoff stehenden Arbeitsflüssigkeit, hier als Arbeitsfluid bezeichnet, verdichtet bzw. verdrängt wird. Der Wasserstoffverdichter bzw. -verdränger kann in einer ersten erfindungsgemäßen Variante als Wasserstoffspeicher ausgebildet sein, von dem Wasserstoff beispielsweise in einen Wasserstofftank eines Fahrzeugs überführt werden kann. Bei dem Wasserstoffspeicher fungiert das Arbeitsfluid als Flüssigkolben, um eine Verdichtung bzw. Verdrängung des Wasserstoffs in direktem Kontakt mit dem Wasserstoff zu bewerkstelligen. In einer zweiten erfindungsgemäßen Variante kann der Wasserstoffverdichter bzw. -verdränger als Gehäuse-Kolben-Einheit mit einem, insbesondere zylindrischen, Gehäuse ausgeführt sein, in welchem das Arbeitsfluid, ebenfalls als Flüssigkolben im direkten Kontakt mit dem Wasserstoff, zur Verdichtung bzw. Verdrängung des Wasserstoffs bewegt, insbesondere in einer axialen Richtung des Gehäuses hin- und herbewegt, wird.

Mit einer zweiten Ausführungsform der Erfindung werden eine Zylinder-Kolben-Anordnung und ein entsprechendes Verfahren bereitgestellt, bei welchen die Bewegung eines Festkörper-Kolbens in einem Gehäuse einer Gehäuse-Kolben-Anordnung durch ein Dichtfluid abgedichtet wird.

Wie in der WO 2006/034748 A1 eingangs geschildert wird, werden beim Verdichten von gasförmigen Medien regelmäßig Kolbenverdichter eingesetzt, um das zu verdichtende Medium von dem den Kolben antreibenden Medium, beispielsweise Hydrauliköl, getrennt zu halten. Bei der Verdichtung von Wasserstoff sind passgenaue Zylinder mit Kolben und wirksame dynamische Dichtsysteme erforderliche. Diese führen zu hohen Produktions- und Wartungskosten. Oftmals werden daher für solche Anwendungen noch kostenintensivere Verdichtungstechnologien, wie Membranverdichter und schmierungslose Kolbenverdichter, herangezogen. Vor diesem Hintergrund werden in der WO 2006/034748 A1 ein Verfahren und eine Vorrichtung zum Verdichten von Wasserstoff offenbart, bei welchem die Verdichtung mit einem Arbeitsfluid erfolgt, in dem sich das Gas nicht löst und/oder das vom Gas rückstandsfrei trennbar ist. Somit werden Kolben, die aus einem festen Material bestehen, durch eine nicht komprimierbare Flüssigkeitssäule ersetzt. Das Arbeitsfluid kann eine ionische Flüssigkeit, ein schwer siedendes Hydrauliköl, eine Flüssigkeit mit einem sehr niedrigen Dampfdruck (z.B. Vakuumpumpenöle, Salzschmelzen und Metalle mit niedrigem Schmelzpunkt) oder eine Flüssigkeit mit einer Gaslöslichkeit von weniger als 10⁻⁴ mol/l bar sein.

Die WO 2006/120145 A1 betrifft ebenfalls ein Arbeitsfluid zur Verdichtung von Wasserstoff, welches die zur Verdichtung notwendige Kraft direkt auf das Gas überträgt und einen Dampfdruck von weniger als 10⁻³ mbar aufweist. Das Arbeitsfluid kann eine molekulare Flüssigkeit sein, z.B. ein Mineralöl, ein Silikonöl oder ein synthetisches Öl.

In der DE 10 2011 101 504 A1 wird ein weiteres Verfahren zum Verdichten von Wasserstoff mit einem Arbeitsfluid offenbart. Als Arbeitsfluid kann eine ionische Flüssigkeit, ein perfluorierter Polyether oder ein Thermoöl eingesetzt werden.

Die DE 198 48 234 A1 betrifft ein Verfahren und einen Verdichter zum Komprimieren eines Gases. Dabei befinden sich das Gas und ein Arbeitsfluid in einem Behälter, und das Gas wird durch Anheben des Füllstands des Arbeitsfluids komprimiert. Als Arbeitsfluid kann eine Flüssigkeit eingesetzt werden, die einen niedrigen Dampfdruck aufweist und/oder mit dem Gas keine Verbindung eingeht, beispielsweise Silikonöle, Wasser oder Kohlenwasserstoffe.

In der DE 10 2015 016327 A1 wird schließlich eine Tankstelle zur Befüllung von Speicherbehältern in mobilen Fahrzeugen mit Wasserstoff beschrieben. Der Wasserstoff wird in einem oder mehreren Konstantdruckspeichern gelagert, mit welchen das Gas bei einem bestimmten, konstanten Druck zur Verfügung gestellt wird. Dafür weist der Konstantdruckspeicher einen Zylinder auf, welcher durch einen beweglichen Trennkolben in zwei Bereiche aufgeteilt ist. Der erste Bereich nimmt den Wasserstoff auf. Der zweite Bereich nimmt eine Flüssigkeit, beispielsweise eine Hydraulikflüssigkeit auf. Während der Einspeicherphase wird der Druck des Wasserstoffs im ersten Bereich durch Verschieben des Trennkolben konstant gehalten, wobei der erste Bereich vergrö-ßert und der zweite Bereich verkleinert wird. Während der Ausspeicherphase wird das Volumen des ersten Bereiches verkleinert, indem mehr Flüssigkeit in den zweiten Bereich gefördert wird und das Volumen des zweiten Bereiches so vergrößert wird, so dass wiederum der Druck im ersten Bereich konstant gehalten wird.

Wie in der EP 3 514 380 A1 geschildert wird, ist die Abdichtung eines klassischen Verdichterkolbens aus einem Festkörper sehr kompliziert und aufwendig. Dies gilt insbesondere für die Verdichtung von Wasserstoff, welcher höchste Anforderungen an die Dichtungen stellt. Somit ist ein häufiger Dichtungsaustausch erforderlich. Die EP 3 514 380 A1 schlägt einen Verdichter vor, bei welchem der Dichtungsaustausch automatisiert wird. Wenn die Hochdruckdichtung die Abdichtung des Hochdruckkolbens aufgrund von Verschleiß oder Beschädigung nicht mehr gewährleisten kann, wird eine Wechselvorrichtung aktiviert, mit welcher die Hochdruckdichtung gegen eine Ersatz-Hochdruckdichtung ausgetauscht wird. Wenn sämtliche (Ersatz-)Hochdruckdichtungen verschlissen sind, kann das Magazin als Ganzes gegen ein entsprechendes Magazin mit unverbrauchten Ersatz-Hochdruckdichtungen getauscht werden oder es können neue Ersatz-Hochdruckdichtungen in das Magazin eingelegt werden. Somit kann mit diesem Dichtungswechsler der Austausch der Dichtung wesentlich erleichtert werden. Demgegenüber wäre es jedoch wünschenswert, die Abdichtung eines Verdichterkolbens beim Verdichten von Wasserstoff weiter zu verbessern, so dass ein Austausch der Dichtung gar nicht erst notwendig oder zumindest seltener notwendig wird.

Aus der WO 2013/079692 A1 ist ein andersartiges Kugelventil mit einer externen Dichtungsanordnung bekannt, in welcher ein Dichtfluid eingesetzt wird. Beschrieben wird der Einsatz eines Polyalkylenglykols als Dichtfluid.

Die im Stand der Technik erwähnten Arbeitsfluide haben sich für die oben geschilderten Anwendungen als untauglich bzw. nachteilig erwiesen. Einige der im Stand der Technik bekannten Arbeitsfluide sind hochviskos, beispielsweise Mineralöle, Hydrauliköle, synthetische Öle und perfluorierte Polyether. Eine hohe Viskosität geht einher mit einer hohen Schaumneigung, was die Kavitationsneigung des Arbeitsfluids und folglich den Verschleiß von Anlagenteilen erhöhen kann. Auch kann es zu Verschleppungen des Arbeitsfluids aus dem vorgesehenen Prozessraum kommen. Dieses Problem ist beispielsweise beim Betanken eines Fahrzeugs mit Wasserstoff kritisch, wenn der Wasserstoff aus dem Wasserstoffspeicher in den Wasserstofftank des Fahrzeugs überführt wird. Dabei sind Einschleppungen des Arbeitsfluids in den Wasserstofftank des Fahrzeugs jedenfalls zu vermeiden. Andere im Stand der Technik bekannte Arbeitsfluide, etwa Thermoöle, Wasser und Kohlenwasserstoffe, haben eine hohe Gaslöslichkeit bzw. einen hohen Dampfdruck und neigen daher dazu, in die Gasphase verbracht zu werden. Die im Stand der Technik bekannten Arbeitsfluide können somit bei den eingangs beschriebenen Anwendungen nachteilig für eine stabile Prozessführung und die Lebensdauer der Anlagen sein.

Somit besteht die Aufgabe der vorliegenden Erfindung darin, zumindest einzelne Nachteile des Standes der Technik zu lindern bzw. zu beheben. Es besteht insbesondere ein Bedarf an Arbeitsfluiden und Dichtfluiden, mit welchen bei den eingangs beschriebenen Anwendungen eine hohe Prozessstabilität gewährleistet wird und der Verschleiß der Anlagenteile möglichst gering ist.

Diese Aufgabe wird durch einen Wasserstoffverdichter und/oder -verdränger nach Anspruch 1, ein Verfahren zum Verdichten und/oder Verdrängen von Wasserstoff nach Anspruch 7, eine Gehäuse-Kolben-Anordnung nach Anspruch 8, einen Rotor nach Anspruch 12 und ein Verfahren zum Abdichten der Bewegung eines Festkörper-Kolbens gegenüber einem Gehäuse nach Anspruch 14 gelöst.

Bei der ersten erfindungsgemäßen Ausführung als Wasserstoffverdichter und/oder -verdränger kann mit Hilfe des das Polyalphaolefin aufweisenden Arbeitsfluids die für eine Verdichtung und/oder Verdrängung des Wasserstoffs benötigte Arbeit verrichtet werden. Bei der zweiten erfindungsgemäßen Ausführung als Gehäuse-Kolben-Anordnung kann mit Hilfe des das Polyalphaolefin aufweisenden Dichtfluids die Bewegung des Festkörper-Kolbens gegenüber dem Gehäuse abgedichtet werden. Bei beiden Ausführungen ist die Verwendung eines Polyalphaolefins (PAO) überraschend, da besondere Vorteile erzielt werden, ohne die für PAO typischen Nachteile in Kauf nehmen zu müssen.

Bei praktischen Versuchen hat sich herausgestellt, dass ein besonderer Vorteil des PAO für die erfindungsgemäßen Anwendungen seine Dünnflüssigkeit, d.h. seine niedrige Viskosität, ist. Damit kann beispielsweise das Problem vermieden werden, dass durch Druckwechsel in das Fluid eingelöste Gase beim Wiederentspannen zum Aufschäumen des Fluids führen. Ein solches Aufschäumen könnte etwa in einer das Arbeitsfluid nachführenden Pumpe die Kavitationsneigung erhöhen, wodurch der Verschleiß der Pumpe erhöht würde. Bei der Betankung eines Fahrzeugs mit Wasserstoff könnte das Aufschäumen des Arbeitsfluids weiters Fluidverschleppungen in den Wasserstofftank bewirken, welche jedoch vermieden werden sollen. Beim Stand der Technik wurden hochviskose Arbeitsfluide, beispielsweise ionische Flüssigkeiten, vorgeschlagen, welche eine hohe Schaumneigung haben, die durch eine sehr geringe Gaslöslichkeit kompensiert werden sollte. Tatsächlich wurde die erforderliche geringe Gaslöslichkeit in der Praxis jedoch nicht erreicht. Andere Arbeitsfluide wie Mineralöle, synthetische Öle und Hydrauliköle sind so viskos, dass die Schaumbildung einen Einsatz bei den erfindungsgemäßen Anwendungen sehr nachteilig bzw. unmöglich machen würde. Andererseits sind Thermoöle wegen ihrer Neigung zu Verschleppungen insbesondere für einen Einsatz bei Anlagen, die Wasserstoff für Fahrzeuge mit Brennstoffzellenantrieb zur Verfügung stellen, untauglich. Der erfindungsgemäße Einsatz des PAO beruht auf der Erkenntnis, dass mit der geringen Schaumneigung des PAO eine Schaumbildung zuverlässig vermieden werden kann, ohne eine extrem niedrige Gaslöslichkeit vorauszusetzen. Bei den erfindungsgemäßen Anwendungen kann die geringe Schaumbildung des PAO optimal genutzt werden, auch wenn die Gaslöslichkeit des PAO zwar absolut gesehen recht niedrig, aber höher als bei den ionischen Flüssigkeiten ist.

Unter einem "Polyalphaolefin" wird ein Poly-1-Olefin verstanden, welches durch Polymerisation von Alphaolefinen hergestellt wurde. Der Begriff "Polyalphaoefin" umfasst Polyalphaolefin-Homopolymere, aus zwei oder mehr verschiedenen Monomereinheiten zusammengesetzte Polymere (z.B. Polyalphaolefin-Copolymere, Polyalphaolefin-Terpolymere), sowie Mischungen davon.

Bevorzugt weist das Arbeitsfluid das Polyalphaolefin in einer Menge von 80 Gew% oder mehr auf, bevorzugter 90 Gew% oder mehr, noch bevorzugter 95 Gew% oder mehr, besonders bevorzugt 99 Gew% oder mehr, bezogen auf das Gesamtgewicht des Arbeitsfluids. Dadurch können die positiven Eigenschaften des Polyalphaolefins hinsichtlich geringer Gaslöslichkeit und geringer Schaumneigung effektiv genutzt werden.

Je nach Ausführung kann das Arbeitsfluid genau ein Polyalphaolefin aufweisen. Bei einer bevorzugten Ausführungsform weist das Arbeitsfluid eine Mischung aus zwei oder mehreren Polyalphaolefinen auf. Die physikalischen Eigenschaften des Arbeitsfluids (z.B. Viskosität, Siedepunkt) können dann an die jeweiligen Gegebenheiten angepasst werden.

Das Polyalphaolefin kann eine unverzweigte oder eine verzweigte Kettenstruktur aufweisen (n-Alkan oder iso-Alkan). Auch eine Mischung aus einem unverzweigten Polyalphaolefin und einem Isomer desselben Polyalphaolefins oder eines Polyalphaolefins mit einer abweichenden Anzahl an Kohlenstoffatomen kann verwendet werden. Dadurch kann der Siedepunkt des Arbeitsfluids angepasst werden. Insbesondere die verzweigten Moleküle haben einen erheblichen Einfluss auf die Viskosität des Arbeitsfluids.

Bei einer bevorzugten Ausführungsform weisen zumindest 90 Gew% des Polyalphaolefins 19 oder weniger Kohlenstoffatome pro Molekül auf, bevorzugt 14 bis 18 Kohlenstoffatome pro Molekül, besonders bevorzugt 16 bis 18 Kohlenstoffatome pro Molekül, bezogen auf das Gesamtgewicht des Polyalphaolefins. Bevorzugt weisen zumindest 95 Gew% des Polyalphaolefins eine solche Anzahl von Kohlenstoffatomen auf, noch bevorzugter zumindest 99 Gew%, bezogen auf das Gesamtgewicht des Polyalphaolefins. Polyalphaolefine mit einer solchen Anzahl von Kohlenstoffatomen weisen eine besonders geringe Gaslöslichkeit und eine besonders geringe Schaumneigung auf, sodass sie sich gut als Arbeitsfluid eignen. Weist das Arbeitsfluid zwei oder mehr Polyalphaolefine auf, weisen vorzugsweise alle Polyalphaolefine eine solche Anzahl von Kohlenstoffatomen auf.

Vorzugsweise weisen maximal 10 Gew% des Polyalphaolefins 20 oder mehr Kohlenstoffatome auf, insbesondere 20 bis 30 Kohlenstoffatome, bezogen auf das Gesamtgewicht des Polyalphaolefins. Bevorzugt weisen maximal 5 Gew% des Polyalphaolefins eine solche Anzahl von Kohlenstoffatomen auf, noch bevorzugter maximal 3 Gew%, bezogen auf das Gesamtgewicht des Polyalphaolefins. Dadurch kann die Viskosität geringgehalten werden, was mit einer geringen Schaumneigung einhergeht.

Das Arbeitsfluid weist vorzugsweise einen Anteil eines aromatischen Kohlenwasserstoffs von maximal 1 Gew% auf, bevorzugt maximal 0,5 Gew%, bezogen auf das Gesamtgewicht des Arbeitsfluids. Auch hierdurch kann die Viskosität und folglich die Schaumneigung geringgehalten werden.

Ein Anteil einer Schwefelverbindung im Arbeitsfluid liegt vorzugsweise bei maximal 10.000 ppm, bevorzugter bei maximal 1.000 ppm, bezogen auf das Gesamtgewicht des Arbeitsfluids. Dadurch kann insbesondere eine Wirkung als Zellgift bei Fahrzeugen mit Brennstoffzellenantrieb vermieden werden.

Die Zusammensetzung des Arbeitsfluids kann mittels zweidimensionaler Gaschromatographie mit Massenspektrometrie-Kopplung (2D-GC-MS) bestimmt werden (Orbitrap Exploris GC 60K MSMS, Thermo Fisher Scientific). Hierfür kann eine Probe aufweisend 4 Gew% des Arbeitsfluids in Dichlormethan hergestellt werden. Die Parameter können wie folgt eingestellt werden:
Für die Gaschromatografie (GC): Kaltaufgabeinjektor (PVT-Injektor) von 40 °C auf 300 °C mit 2,5 °C/sec heizen; Ofen von 40 °C auf 150 °C mit 5 °C/min und anschließend auf 300 °C mit 3 °C/min heizen; Säulenfluss von 0,5 ml/min, Transfer bei 250 °C, Detektorenfluss von 20 ml/min.
Für den Flammenionisationsdetektor (FID): 200 Hz, 300 °C, 350 ml/min Luft, 10 ml/min Nachspeisung, 35 ml/min Wasserstoff.
Für die Massenspektrometrie (MS): 200 °C, Lösungsmittelverzögerung 7 min, m/z von 30 bis 650, 15 k, Kühlfallen-Offset 1,5 V. Durch diese Messung kann sowohl der Gehalt an flüchtigen Polyalphaolefinen mit einer bestimmten Anzahl von C-Atomen, als auch der Gehalt an flüchtigen aromatischen Kohlenwasserstoffen und der Gehalt an flüchtigen Schwefelverbindungen bestimmt werden. Zur Bestimmung von quantitativen Gehalten ist eine entsprechende Kalibrierung der Analyten notwendig.

Das Instrument ist wie folgt aufgebaut:
1. Dimension Säule: BPX 5, 20 m x 0.18 mm x 0.18 µm Flow-Modulator mit Loop 23 cm x 0.53 mm und Bleedline 5 m x 0.1 mm; Modulation 3 s, mit Spülzeit 100 ms
2. Dimension Säule: BPX 50, 5 m x 0.25 mm x 0.1 µm Detektoren: FID, TCD, Massenspektrometer (Exploris: Elektronenstoß-Ionisation und Quadrupol+Orbitrap), Split ratio MS 5:1 TCD/FID

Bevorzugt weist der Wasserstoff bei 50 °C und einem Druck von 50 bar eine Löslichkeit im Arbeitsfluid ausgewählt aus einem Bereich von 0,02 bis 0,15 Liter (l) Wasserstoff pro Liter Arbeitsfluid auf, bevorzugt im Wesentlichen 0,07 l Wasserstoff pro l Arbeitsfluid. Dann besteht eine geringe Neigung des Arbeitsfluids, in die Gasphase verbracht zu werden, bzw. umgekehrt eine geringe Neigung des Wasserstoffs, im Arbeitsfluid gelöst zu werden. Somit kann eine gute Prozessstabilität erreicht werden.

Bevorzugt ist, wenn das Arbeitsfluid bei 70°C eine Viskosität ausgewählt aus einem Bereich von 1 bis 10 Centistoke (cSt), vorzugsweise 1 bis 5 cSt, insbesondere 2,5 bis 4 cSt, aufweist. Durch diese geringe Viskosität kann zumindest weitgehend vermieden werden, dass durch Druckwechsel im Arbeitsfluid gelöster Wasserstoff beim Wiederentspannen zum Aufschäumen des Arbeitsfluids führt, was in weiterer Folge die Kavitationsneigung des Arbeitsfluids erhöhen und zu Verschleiß der Anlagenteile führen kann. Auch kann durch die niedrige Viskosität des Arbeitsfluids vermieden werden, dass das Arbeitsfluid mit dem Gas mitgerissen und verschleppt wird. Zwar kann das erfindungsgemäße Arbeitsfluid aufgrund dieser niedrigen Viskosität verglichen mit im Stand der Technik üblichen Arbeitsfluiden, z.B. Mineralölen oder Hydraulikölen, schlechtere tribologische Eigenschaften aufweisen, insbesondere eine niedrigere Reibung. Dies kann jedoch beispielsweise durch eine hydrostatische Schmierung und/oder eine passende Werkstoffpaarung gut kompensiert werden.

Die Gaslöslichkeit kann in bekannter Weise mit einer "pressure decay method" bei isothermischen Bedingungen gemessen werden.

Das Arbeitsfluid weist vorzugsweise genau einen Siedepunkt (bei Verwendung genau eines PAO) oder ein oberes Ende eines Siedebereichs (bei Verwendung von zwei oder mehr PAOs) von maximal 250 °C auf. Bevorzugt weist das Arbeitsfluid einen Siedepunkt oder einen Siedebereich ausgewählt aus einem Intervall von 90 °C bis 200 °C auf. Aufgrund des niedrigen Siedepunkts bzw. Siedebereichs kann das Arbeitsfluid aufgrund einer Temperaturerhöhung während des Betriebs zwar verdampfen. Wenn das Arbeitsfluid, wie bevorzugt, in einem geschlossenen Kreislauf zum Einsatz kommt, ist das nicht nachteilig, sondern das Arbeitsfluid kann nachfolgend wieder kondensieren, und ein Verdampfen des Arbeitsfluids durch Druckbeaufschlagung kann vermieden werden.

Im Wasserstoffspeicher kann sich das Arbeitsfluidvolumen unterhalb des Wasserstoffvolumens befinden. Dies ist darin begründet, dass das Arbeitsfluid eine höhere Dichte aufweist als der Wasserstoff. Das Arbeitsfluid und der Wasserstoff stehen im Wasserstoffspeicher in direktem Kontakt miteinander, wobei das Wasserstoffvolumen und das Arbeitsfluidvolumen an einer Schicht aneinandergrenzen. Diese Schicht kann schwerkraftsbedingt in einer horizontalen Ebene liegen.

Im Wasserstoffspeicher kann eine erste Öffnung an einer ersten Seite des Wasserstoffspeichers angeordnet sein, um Arbeitsfluid in den Wasserstoffspeicher nachzuführen. Eine zweite Öffnung kann an einer zweiten Seite des Wasserstoffspeichers vorgesehen sein, um Wasserstoff aus dem Wasserstoffspeicher abzuführen. Die zweite Seite kann gegenüber von der ersten Seite angeordnet sein. Dann kann das Volumen des Wasserstoffspeichers gut ausgenutzt werden, und das Arbeitsfluidvolumen kann beim Abführen von Wasserstoff möglichst vollständig durch das Arbeitsfluidvolumen verdrängt werden.

Bevorzugt beträgt der Anfangsdruck des Wasserstoffs im Wasserstoffspeicher, d.h. der Nenndruck des Wasserstoffs vor dem Ausspeichern von Wasserstoff und ohne Nachführen des Arbeitsfluids, sodass das Wasserstoffvolumen und das Arbeitsfluidvolumen jeweils konstant bleiben, mehr als 500 bar, vorzugsweise mehr als 600 bar, insbesondere mehr als 700 bar, beispielsweise im Wesentlichen 800 bar, und/oder maximal 875 bar. Durch diese Druckbeaufschlagung kann eine Verdampfung des Arbeitsfluids reduziert bzw. gänzlich vermieden werden. Somit kann es zu keinem bzw. zu einem nur geringen, wenngleich in einem geschlossenen Hydrauliksystem zeitlich limitierten, Siedeverlust kommen.

Das erfindungsgemäße Verfahren zum Verdrängen und/oder Verdichten von Wasserstoff weist zumindest die folgenden Schritte auf:
(a) Bereitstellen des Wasserstoffverdichters bzw. -verdrängers in einer der oben beschriebenen Ausführungsformen, und
(b) Nachführen von Arbeitsfluid in den Wasserstoffverdichter bzw. -verdränger, sodass das Arbeitsfluidvolumen des Wasserstoffverdichters bzw. -verdrängers vergrößert wird und das Wasserstoffvolumen des Wasserstoffverdichters bzw. -verdrängers verkleinert wird.

In Schritt (b) dient das Arbeitsfluid als Flüssigkolben, mit welchem die für die Verdichtung und/oder Verdrängung des Wasserstoffs erforderliche Kraft auf den Wasserstoff übertragen wird. Durch das Nachführen von Arbeitsfluid, d.h. die Erhöhung des Volumens von Arbeitsfluid im Inneren des Wasserstoffverdichters bzw. -verdrängers, kann das Wasserstoffvolumen verkleinert werden, wobei der Wasserstoff zumindest teilweise komprimiert wird und/oder zumindest teilweise aus dem Gasspeicher abgeführt wird. In welchem Umfang das Wasserstoffvolumen jeweils verkleinert wird, kann unter anderem vom Druck, mit welchem Arbeitsfluid in den Gasspeicher nachgeführt wird, und von der Dichte des Wasserstoffs im bereitgestellten Wasserstoffspeicher abhängen.

Die Erfindung bezieht sich weiters auf ein Verfahren zum Betanken eines Wasserstofftanks, insbesondere eines Fahrzeuges, mit Wasserstoff, mit den Schritten:
(a) Vorsehen eines Wasserstoffspeichers in einer der oben beschriebenen Ausführungsformen mit einem mit Wasserstoff befüllten Wasserstoffvolumen,
(b) Vorsehen eines Arbeitsfluidspeichers mit einem Arbeitsfluid,
(c) Verbinden des Wasserstoffspeichers mit dem Wasserstofftank, so dass Wasserstoff in einer Ausströmphase vom Wasserstoffspeicher in den Wasserstofftank überführt wird, und
(d) Verbinden des Arbeitsfluidspeichers mit dem Wasserstoffspeicher, so dass Arbeitsfluid in einer, vorzugsweise mit der Ausströmphase überlappenden, Nachverdichtungsphase vom Arbeitsfluidspeicher in den Wasserstoffspeicher gepumpt wird, wodurch das mit Wasserstoff befüllte Wasserstoffvolumen in dem Wasserstoffspeicher reduziert wird.

Dieses Betankungsverfahren kann auch mit zumindest einem weiteren Wasserstoffspeicher durchgeführt werden, wobei die Wasserstoffspeicher nacheinander mit dem Wasserstofftank verbunden werden können. Durch Nachführen von Arbeitsfluid in den jeweiligen Wasserstoffspeicher kann der Wasserstoff im jeweiligen Wasserstoffspeicher nachverdichtet, insbesondere wieder auf den Anfangsdruck gebracht, werden.

Weiters bezieht sich die vorliegende Offenbarung auch auf eine Betankungsanlage, insbesondere eine mobile Betankungsanlage, zum Betanken eines Wasserstofftanks, insbesondere eines Fahrzeuges, mit Wasserstoff, aufweisend:
einen Wasserstoffspeicher, welcher den Wasserstoff enthält,
einen Arbeitsfluidspeicher, welcher ein Arbeitsfluid enthält,
eine Steuereinrichtung, insbesondere mit einer Ventilsteuerung, zur Steuerung einer Ausspeicherverbindung zum Ausspeichern von Wasserstoff vom Wasserstoffspeicher zum Wasserstofftank und zur Steuerung einer Zulaufverbindung zwischen dem Arbeitsfluidspeicher und dem Wasserstoffspeicher, und
eine Pumpe, mit welcher Arbeitsfluid vom Arbeitsfluidspeicher zum ersten Wasserstoffspeicher gepumpt werden kann.

Weiters bezieht sich die vorliegende Offenbarung auch auf ein Betankungssystem mit einer Betankungsanlage, wie oben beschrieben, und dem Fahrzeug, wobei der Wasserstofftank des Fahrzeugs mit dem Wasserstoffspeicher der Betankungsanlage verbunden ist.

Bei der erfindungsgemäßen Gehäuse-Kolben-Anordnung weist das Dichtfluid ein Polyalphaolefin auf.

Für die Vorteile und Effekte sowie die bevorzugten Zusammensetzungen des Dichtfluids wird auf die Ausführungen weiter oben in Zusammenhang mit dem Arbeitsfluid verwiesen.

Bei einer bevorzugten Ausführungsform weist der Festkörper-Kolben an seiner dem Dichtfluid zugewandten Stirnseite eine umfangseitige Vertiefung auf. Der Abstand zwischen einer dem Dichtfluid zugewandten Stirnseite des Festkörper-Kolbens und einer dieser Stirnseite zugewandten Seite des Gehäuses ist in dieser Ausführungsform somit im Bereich der Vertiefung größer als in einem radial weiter innen liegenden Bereich. Dadurch kann das Arbeitsvolumen im Bereich der Vertiefung vergrößert werden, wodurch eine besonders gute Abdichtung erreicht werden kann.

Die Vertiefung kann im Längsschnitt des Festkörper-Kolbens gesehen gekrümmt sein. Dadurch kann eine Kontaktfläche zwischen dem Dichtfluid und dem Festkörper-Kolben vergrößert werden, wodurch das Dichtfluid gegen eine Innenwand des Festkörper-Kolbens gedrückt werden kann. Dadurch kann die Dichtungswirkung weiter verbessert werden.

Bei einer bevorzugten Ausführungsform weist das Gehäuse ein äu-ßeres Gehäuseteil und eine zylindrische Einsatz- bzw. Laufbuchse im Inneren des äußeren Gehäuseteils auf. Die Einsatzbuchse kann beispielsweise aus einem Keramikmaterial gefertigt sein. Alternativ kann die Einsatzbuchse innseitig eine Beschichtung aus DLC ("diamond-like carbon", d.h. amorphe Kohlenstoffschichten) aufweisen.

Bei einer bevorzugten Ausführungsform weist der Kolben zumindest eine umlaufende Dichtungsnut, vorzugsweise mehrere in axialer Richtung des Kolbens beabstandete Dichtungsnuten, auf. Die zumindest eine Dichtungsnut bewirkt einen Druckabbau, womit verhindert werden kann, dass das Arbeitsfluid das Arbeitsvolumen entlang der Außenseite des Kolbens verlassen kann. Zudem kann in der Dichtungsnut eine zusätzliche mechanische Dichtung aufgenommen sein.

Beim erfindungsgemäßen Rotor ist der Rotationsantrieb dazu eingerichtet, die Gehäuse-Kolben-Anordnung um die Rotationsachse zu rotieren.

Bei einer bevorzugten Ausführungsform steht die Rotationsachse im Wesentlichen senkrecht zur Längsachse des Festkörper-Kolbens.

Bei einer alternativen Ausführungsform kann die Rotationsachse entlang der Längsachse des Kolbens erstreckt sein.

Das erfindungsgemäße Verfahren zum Abdichten der Bewegung eines Festkörper-Kolbens gegenüber einem Gehäuse weist zumindest die folgenden Schritte auf:
(a) Bereitstellen der Gehäuse-Kolben-Anordnung in einer der oben beschriebenen Ausführungsformen, wobei der Festkörper-Kolben in einer ersten Position gegenüber dem Gehäuse angeordnet ist, und
(b) Bewegen des Festkörper-Kolbens gegenüber dem Gehäuse von der ersten in eine zweite Position, wodurch das vom Gehäuse eingeschlossene Arbeitsvolumen verändert wird, wobei die Bewegung des Festkörper-Kolbens gegenüber dem Gehäuse mit dem Dichtfluid abgedichtet wird.

In der ersten Position kann die dem Dichtfluid zugewandte Stirnseite des Festkörper-Kolbens einen größeren Abstand von einer dieser Stirnseite zugewandten Seite des Gehäuses aufweisen als in der zweiten Position. Dann wird durch das Bewegen des Festkörper-Kolbens in die zweite Position das Arbeitsvolumen verkleinert.

Die Gehäuse-Kolben-Anordnung wird vorzugsweise um die Rotationsachse rotiert. Dadurch kann trägheitsbedingt eine Zentrifugalkraft auf das Dichtfluid wirken, die das Dichtfluid derart nach außen treibt, dass eine weiter verbesserte Abdichtung erreicht werden kann.

Im Arbeitsvolumen kann Wasserstoff vorgesehen sein, welcher durch das Bewegen des Festkörper-Kolbens in Schritt (b) zumindest teilweise komprimiert werden und/oder zumindest teilweise durch eine im Gehäuse angeordnete Öffnung abgeführt werden kann. Die Öffnung kann an einer Seite des Gehäuses angeordnet sein, in deren Richtung die Bewegung des Kolbens erfolgt, um das Arbeitsvolumen zu verkleinern.

Die Erfindung wird nachfolgend anhand von bevorzugten Ausführungsbeispielen, welche in den Figuren dargestellt sind, weiter beschrieben.

Für die Zwecke dieser Offenbarung bezieht sich "Wasserstoff" stets auf den molekularen Wasserstoff (H2).

Fig. 1 und 2 zeigen im Längsschnitt einen Wasserstoffspeicher in zwei verschiedenen Zuständen, wobei ein Polyalphaolefin als Flüssigkolben zur Verdrängung und/oder Verdichtung von Wasserstoff eingesetzt wird.

Fig. 3 und 4 zeigen im Längsschnitt eine Gehäuse-Kolben-Anordnung in zwei verschiedenen Zuständen, wobei ein Polyalphaolefin als Umfangsdichtung zur Abdichtung der Hin- und Her-Bewegung eines Festkörper-Kolbens entlang des als Zylinder ausgeführten Gehäuses abgedichtet wird.

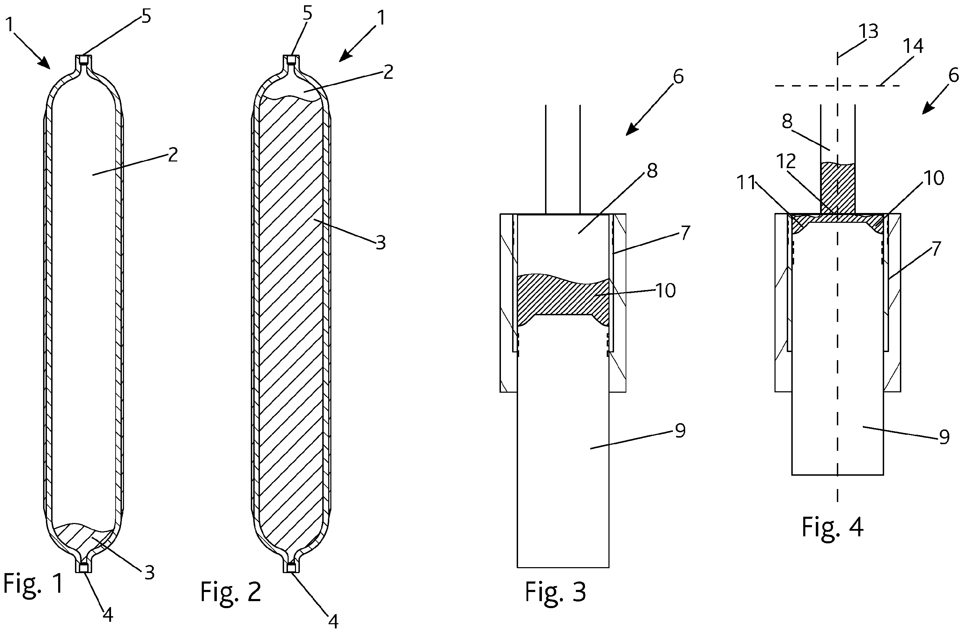

In Fig. 1 und Fig. 2 ist ein Wasserstoffverdichter bzw. Wasserstoffverdränger gezeigt, welcher hier als Wasserstoffspeicher 1 zum Speichern, Ausspeichern und Nachverdichten des im Wasserstoffspeicher 1 verbleibenden Wasserstoff ausgebildet ist. Gemäß Fig. 1 befindet sich der Wasserstoffspeicher in einem ersten Zustand. Der Wasserstoffspeicher 1 weist ein mit Wasserstoff 2 befülltes Wasserstoffvolumen und ein mit einem Arbeitsfluid 3 befülltes Arbeitsfluidvolumen auf, welche zusammen einen Füllraum des Wasserstoffspeichers ergeben. Das Arbeitsfluid 3 weist eine Mischung von Polyalphaolefinen auf, die 16 bis 18 Kohlenwasserstoffatome pro Molekül aufweisen. Das Arbeitsfluid 3 ist als Flüssigkolben ausgebildet, welcher im direkten Kontakt mit dem Wasserstoff (d.h. ohne dazwischen angeordneten Festkörper-Kolben) steht, so dass mit dem Arbeitsfluid 3 die Grenzfläche zu dem Wasserstoff verschoben werden kann. Der Wasserstoffspeicher 1 weist eine erste Öffnung 4 auf, über welche das Arbeitsfluid 3 von einem (nicht gezeigten) Arbeitsfluidspeicher nachgeführt werden kann. Zudem weist der Wasserstoffspeicher 1 eine zweite Öffnung 5 auf, über welche der Wasserstoff 2 vom Wasserstoffspeicher 1 abgeführt werden kann. In der gezeigten Ausführungsform ist die erste Öffnung 4 an einem Boden des Wasserstoffspeichers 1 ausgebildet und die zweite Öffnung 5 ist an einer Oberseite des Wasserstoffspeichers 1 ausgebildet.

Für die Zwecke dieser Offenbarung beziehen sich die Orts- und Richtungsangaben, wie "oben" und "unten", auf den bestimmungsgemäßen Gebrauchszustand des Wasserstoffspeichers 1.

Bei einer bevorzugten Ausführung ist der Wasserstoffspeicher 1 ein Bestandteil einer Betankungsanlage, welche mit einem Wasserstofffahrzeug verbunden werden kann, um einen Wasserstofftank des Wasserstofffahrzeugs mit Wasserstoff zu befüllen (nicht gezeigt) .

Gemäß Fig. 1 nimmt das Arbeitsfluid ein erstes Arbeitsfluidvolumen im Inneren des Wasserstoffspeichers 1 ein. Somit weist das Arbeitsfluid im ersten Zustand einen ersten Füllstand auf.

Durch Nachführen von Arbeitsfluid 3 in den Wasserstoffspeicher 1 kann das Arbeitsfluidvolumen vergrößert und das Wasserstoffvolumen entsprechend verkleinert werden. Dabei kann ein Teil des Wasserstoffs 2 im Wasserstoffvolumen komprimiert werden, während ein anderer Teil aus dem Wasserstoffspeicher 1 abgeführt und bei einer bevorzugten Anwendung dem Tank des Wasserstofffahrzeugs zugeführt werden kann.

Fig. 2 zeigt den Wasserstoffspeicher 1 der Fig. 1 in einem zweiten Zustand, wobei Arbeitsfluid 3 nachgeführt wurde. Das Arbeitsfluid nimmt ein zweites Arbeitsfluidvolumen ein, welches größer als das erste Arbeitsfluidvolumen ist. Somit weist das Arbeitsfluid im zweiten Zustand einen zweiten Füllstand auf, welcher höher als der erste Füllstand ist.

Die Fig. 3 und Fig. 4 zeigen eine zweite erfindungsgemäße Ausführungsform, in welcher das Polyalphaolefin als Dichtfluid eingesetzt wird.

In Fig. 3 ist eine Gehäuse-Kolben-Anordnung 6 in einem ersten Zustand dargestellt. Die Gehäuse-Kolben-Anordnung 6 weist ein Gehäuse 7 auf, das in der gezeigten Ausführung ein äußeres Gehäuseteil und eine zylindrische Einsatz- bzw. Laufbuchse auf, welches eine zylindrische Aussparung des äußeren Gehäuseteils ausfüllt. Die Einsatzbuchse kann beispielsweise aus einem Keramikmaterial gefertigt sein. Alternativ kann die Einsatzbuchse innseitig eine Beschichtung aus DLC aufweisen. Das Gehäuse 7 schließt im Inneren ein Arbeitsvolumen ein, in welchem Wasserstoff 8 aufgenommen ist. Weiters weist die Gehäuse-Kolben-Anordnung 6 einen Festkörper-Kolben 9 auf, der zur Veränderung des Arbeitsvolumens im Wesentlichen passgenau entlang der Innenwandung des Gehäuses 7 axial verschieblich ist. Anders als bei der vorangehenden Ausführungsform ist gemäß Fig. 3 und Fig. 4 kein Flüssigkolben, sondern der Festkörper-Kolben 9 vorgesehen, welcher als ein im Wesentlichen formunveränderliches Maschinenbauteil ausgeführt ist. Zur Abdichtung der Bewegung des Festkörper-Kolbens 9 gegenüber dem Gehäuse 7 ist ein Dichtfluid 10 vorgesehen, mit welchem verhindert wird, dass der Wasserstoff 8 vom Arbeitsvolumen auf die vom Arbeitsvolumen abgewandte Seite des Kolbens 9 gelangt. Zudem kann am Umfang des Kolbens 9 zumindest eine umlaufende Dichtungsnut, vorzugsweise mehrere in axialer Richtung des Kolbens 9 beabstandete Dichtungsnuten, vorgesehen sein. Die zumindest eine Dichtungsnut sorgt für einen Druckabbau, womit verhindert wird, dass das Arbeitsfluid den Arbeitsraum entlang des Kolbens 9 verlassen kann. Zudem kann in der Dichtungsnut eine zusätzliche mechanische Dichtung aufgenommen sein.

In der gezeigten Ausführung besteht das Dichtfluid 10 aus einer Mischung von Polyalphaolefinen, die 16 bis 18 Kohlenwasserstoffatome pro Molekül aufweisen. Der Festkörper-Kolben 9 weist an seiner dem Dichtfluid 10 zugewandten Stirnseite eine umfangseitige Vertiefung 11 auf, die im Längsschnitt des Kolbens 9 gekrümmt ist. In einer Seite des Gehäuses 7, in deren Richtung der Kolben 9 bewegt wird, um das Arbeitsvolumen zu verkleinern, ist eine Öffnung 12 angeordnet, um den Wasserstoff 8 abzuführen.

In Fig. 3 ist der Kolben 9 in einer ersten Position gegenüber dem Gehäuse 7 angeordnet. In dieser ersten Position weist die dem Dichtfluid 10 zugewandte Stirnseite des Festkörper-Kolbens 9 einen vergleichsweise großen Abstand von einer dieser Stirnseite zugewandten Seite des Gehäuses 7 auf. Dementsprechend ist das Arbeitsvolumen vergleichsweise groß. Durch axiales Bewegen des Festkörper-Kolbens 9 hin zu einer zweiten Position kann das vom Gehäuse 7 eingeschlossene Arbeitsvolumen verkleinert werden. Ein Teil des Wasserstoffs 8 kann dadurch komprimiert werden, während ein anderer Teil durch die Öffnung 12 aus dem Gehäuse 7 abgeführt werden kann.

Fig. 4 zeigt die Gehäuse-Kolben-Anordnung 6 der Fig. 3 in einem zweiten Zustand. Der Festkörper-Kolben 9 ist in einer zweiten Position angeordnet, in welcher das Arbeitsvolumen kleiner ist als im ersten Zustand der Gehäuse-Kolben-Anordnung 6. Das Dichtfluid 10 füllt die Dichtstellen benachbart der Innenseite des Gehäuses 7 auf, wodurch die Bewegung des Festkörper-Kolbens 9 gegenüber dem Gehäuse 7 abgedichtet wird. Durch Rotieren der Gehäuse-Kolben-Anordnung 6 um eine Rotationsachse 14, welche senkrecht auf eine Längsachse des Festkörper-Kolbens 9 steht, kann eine Zentrifugalkraft auf das Dichtfluid 10 wirken, wodurch das Dichtfluid 10 noch besser gegen die Innenseite des Gehäuses 7 gedrückt werden kann, sodass die Abdichtung weiter verbessert wird.

## Patentansprüche

1. Wasserstoffverdichter und/oder -verdränger für Wasserstoff, insbesondere Wasserstoffspeicher (1) zum Speichern von Wasserstoff (2) oder Gehäuse-Kolben-Einheit, aufweisend:
ein mit Wasserstoff (2) befülltes Wasserstoffvolumen, und
ein mit einem Arbeitsfluid (3) befülltes Arbeitsfluidvolumen, wobei das Arbeitsfluid (3) als Flüssigkolben zur Veränderung des Wasserstoffvolumens ausgebildet ist,
**dadurch gekennzeichnet, dass**
das Arbeitsfluid (3) ein Polyalphaolefin aufweist.

2. Wasserstoffverdichter und/oder -verdränger nach Anspruch 1, **dadurch gekennzeichnet, dass** das Arbeitsfluid (3) das Polyalphaolefin in einer Menge von zumindest 80 Gew% aufweist, bezogen auf das Gesamtgewicht des Arbeitsfluids (3).

3. Wasserstoffverdichter und/oder -verdränger nach Anspruch 1 oder 2, **dadurch gekennzeichnet, dass** zumindest 90 Gew% des Polyalphaolefins 14 bis 18 Kohlenstoffatome pro Molekül aufweisen, bezogen auf das Gesamtgewicht des Polyalphaolefins.

4. Wasserstoffverdichter und/oder -verdränger nach einem der Ansprüche 1 bis 3, **dadurch gekennzeichnet, dass** maximal 10 Gew% des Polyalphaolefins 20 oder mehr Kohlenstoffatome pro Molekül aufweisen, bezogen auf das Gesamtgewicht des Polyalphaolefins.

5. Wasserstoffverdichter und/oder -verdränger nach einem der Ansprüche 1 bis 4, **dadurch gekennzeichnet, dass** das Arbeitsfluid (3) einen Anteil eines aromatischen Kohlenwasserstoffs von 1 Gew% oder darunter aufweist, bezogen auf das Gesamtgewicht des Arbeitsfluids (3).

6. Wasserstoffverdichter und/oder -verdränger nach einem der Ansprüche 1 bis 5, **dadurch gekennzeichnet, dass** das Arbeitsfluid bei 70°C eine Viskosität ausgewählt aus einem Bereich von 1 bis 5 cSt, insbesondere 2,5 bis 4 cSt, aufweist.

7. Verfahren zum Verdrängen und/oder Verdichten von Wasserstoff (2), mit den Schritten:
(a) Bereitstellen des Wasserstoffverdichters und/oder -verdrängers nach einem der Ansprüche 1 bis 6, und
(b) Nachführen von Arbeitsfluid (3) in den Wasserstoffverdichter und/oder -verdränger, sodass das Arbeitsfluidvolumen des Wasserstoffverdichters und/oder -verdrängers vergrößert wird und das Wasserstoffvolumen des Wasserstoffverdichters und/oder -verdrängers verkleinert wird.

8. Gehäuse-Kolben-Anordnung (6), aufweisend:
ein Gehäuse (7), vorzugweise einen Zylinder, wobei das Gehäuse (7) ein Arbeitsvolumen zur Aufnahme von Wasserstoff (8) einschließt,
einen Festkörper-Kolben (9), welcher zur Veränderung des Arbeitsvolumens gegenüber dem Gehäuse (7) beweglich ist, und
eine Dichtung zur Abdichtung der Bewegung des Festkörper-Kolbens (9) gegenüber dem Gehäuse (7), wobei als Dichtung ein Dichtfluid (10) vorgesehen ist,
**dadurch gekennzeichnet, dass**
das Dichtfluid (10) ein Polyalphaolefin aufweist.

9. Gehäuse-Kolben-Anordnung (6) nach Anspruch 8, **dadurch gekennzeichnet, dass** zumindest 90 Gew% des Polyalphaolefins 14 bis 18 Kohlenstoffatome pro Molekül aufweisen, bezogen auf das Gesamtgewicht des Polyalphaolefins.

10. Gehäuse-Kolben-Anordnung (6) nach Anspruch 8 oder 9, **dadurch gekennzeichnet, dass** der Festkörper-Kolben (9) an seiner dem Dichtfluid (10) zugewandten Stirnseite eine umfangseitige Vertiefung aufweist.

11. Gehäuse-Kolben-Anordnung (6) nach einem der Ansprüche 8 bis 10, **dadurch gekennzeichnet, dass** die Vertiefung im Längsschnitt des Festkörper-Kolbens (9) gesehen gekrümmt ist.

12. Rotor, aufweisend:
eine Rotationsachse (13, 14),
einen Rotationsantrieb, und
eine Gehäuse-Kolben-Anordnung (6) nach einem der Ansprüche 8 bis 11, wobei der Rotationsantrieb dazu eingerichtet ist, die Gehäuse-Kolben-Anordnung (6) um die Rotationsachse (13, 14) zu rotieren.

13. Rotor nach Anspruch 12, **dadurch gekennzeichnet, dass** die Rotationsachse (14) senkrecht auf die Längsachse des Festkörper-Kolbens (9) steht.

14. Verfahren zum Abdichten der Bewegung eines Kolbens (9) gegenüber einem Gehäuse (7), mit den Schritten:
(a) Bereitstellen einer Gehäuse-Kolben-Anordnung (6) nach einem der Ansprüche 8 bis 11, wobei der Festkörper-Kolben (9) in einer ersten Position gegenüber dem Gehäuse (7) angeordnet ist, und
(b) Bewegen des Festkörper-Kolbens (9) gegenüber dem Gehäuse (7) von der ersten in eine zweite Position, wodurch das vom Gehäuse (7) eingeschlossene Arbeitsvolumen verändert wird, wobei die Bewegung des Festkörper-Kolbens (9) gegenüber dem Gehäuse (7) mit dem Dichtfluid (10) abgedichtet wird.

15. Verfahren nach Anspruch 14, **dadurch gekennzeichnet, dass** die Gehäuse-Kolben-Anordnung (6) um eine Rotationsachse (13, 14) rotiert wird.
